(19) Europäisches Patentamt / European Patent Office / Office européen des brevets

(11) **EP 4 281 424 B1**

(12) **EUROPÄISCHE PATENTSCHRIFT**

(45) Veröffentlichungstag und Bekanntmachung des Hinweises auf die Patenterteilung:
**25.12.2024  Patentblatt 2024/52**

(21) Anmeldenummer: **22700761.4**

(22) Anmeldetag: **11.01.2022**

(51) Internationale Patentklassifikation (IPC):
**C04B 7/38** (2006.01)

(52) Gemeinsame Patentklassifikation (CPC):
(C-Sets verfügbar)
**C04B 7/38**                         (Forts.)

(86) Internationale Anmeldenummer:
**PCT/EP2022/050464**

(87) Internationale Veröffentlichungsnummer:
**WO 2022/157041 (28.07.2022 Gazette 2022/30)**

(54) **VERFAHREN ZUM BETREIBEN EINER ANLAGE ZUR HERSTELLUNG UND/ ODER HANDHABUNG VON ZEMENTKLINKER**

METHOD FOR OPERATING A SYSTEM FOR PRODUCING AND/OR HANDLING CEMENT CLINKER

PROCÉDÉ DE FONCTIONNEMENT D'UN SYSTÈME DE PRODUCTION ET/OU DE MANIPULATION DE CLINKER DE CIMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2021   DE 102021200561**
          **22.01.2021   BE 202105041**

(43) Veröffentlichungstag der Anmeldung:
**29.11.2023   Patentblatt 2023/48**

(73) Patentinhaber:
• **thyssenkrupp Polysius GmbH**
  **59269 Beckum (DE)**
• **thyssenkrupp AG**
  **45143 Essen (DE)**

(72) Erfinder:
• **ENDERS, Michael**
  **48143 Münster (DE)**
• **NEUMANN, Thomas**
  **97753 Karlstadt (DE)**
• **WEIGAND, Patrick**
  **97072 Würzburg (DE)**

(74) Vertreter: **thyssenkrupp Intellectual Property GmbH**
**ThyssenKrupp Allee 1**
**45143 Essen (DE)**

(56) Entgegenhaltungen:
**CA-A- 838 254      CN-U- 203 083 901**

(52) Gemeinsame Patentklassifikation (CPC): (Forts.)

C-Sets
**C04B 7/38, C04B 7/361, C04B 7/48;**
**C04B 7/38, C04B 7/48, C04B 40/0032**

C-Sets

**Beschreibung**

Die Erfindung betrifft ein Verfahren zum Betreiben einer Anlage zur Herstellung und/ oder Handhabung von Zementklinker. Die Erfindung betrifft auch eine Anlage zur Herstellung und/ oder Handhabung von Zement aus Zementklinker, Sulfatträger und Zumahlstoffen. Das Verfahren und die Anlage dienen insbesondere zur Herstellung von Zementklinker und Zement zur Verwendung als Porenbeton und Betonen mit Luftporen.

Porenbeton und solche mit erhöhten Anteil an Luftporen werden üblicherweise zur Herstellung von Mauersteinen oder Fertigbauteilen oder auch Fertigbeton verwendet und zeichnen sich durch eine im Vergleich zu Standardbeton ohne Porenbildner geringere Dichte bedingt durch eine zusätzliche gewünschte vergrößerte Porenanzahl oder ein vergrößertes Volumen der Poren oder beides aus. Die relativ großen Poren und die zusätzlichen Poren haben einen positiven Einfluss auf die Verarbeitbarkeit, die Frostbeständigkeit, Segregation, Dauerhaftigkeit gegen sulfatreiche Lösungen und verhindern beispielsweise ein Schrumpfen oder eine Rissbildung im Beton.

Die Herstellung von Zement zur Verwendung als Porenbeton oder einem Beton mit erhöhtem Luftporenanteil erfolgt üblicherweise durch eine Zudosierung von Aluminiumpulver zu dem Zement bei der Vermahlung oder der Herstellung eines Betons. Das Aluminiumpulver bildet im alkalischen Milieu, insbesondere bei der Hydratation von Zement, mit Wasser Wasserstoffgas. Das Wasserstoffgas bildet die Poren in dem fertigen Baustoff aus.

Bei einem zu hohen Gehalt an elementarem Aluminium in dem Klinker oder Zement kann es allerdings durch eine Wasserstoffgasbildung zu einem unerwünschten Volumenzuwachs kommen. Dieser Volumenzuwachs ist insbesondere für die Formgebung gegossener Betonbauteile und bei Betonfertigteilen nachteilig.

Aus der DE 10 2014 113 548 A1 ist ein Verfahren zur Herstellung eines Zements bekannt. Im Zementklinkerherstellungsprozess verbleibt insbesondere bei einer Verwendung von großen Mengen an Sekundärbrennstoffe bei der Klinkerphasenbildung nicht resorbiertes elementares Aluminium im fertigen Zementklinker. Beispielsweise dienen Reste von Verbundverpackungen aus Sekundärbrennstoffen, die im Ofenprozess nicht oxidiert und in die Klinkermineralogie eingebunden werden, als Quelle für elementares Aluminium in dem Zementklinker. Neben immer präsenten Anteilen an oxidischen Aluminium im Zementklinkers sind die Gehalte an elementarem Aluminium mit den üblichen Röntgenmethoden (XRF, XRD) nicht quantifizierbar.

CA 838 254 zeigt einen Regelkreis in dem der Zementklinker mit Röntgenstrahlung charakterisiert wird und der Prozess (u.a. die Rohstoffzufuhr) dann abhängig von den Resultaten der Analyse angepasst wird.

Davon ausgehend ist es Aufgabe der vorliegenden Erfindung, ein Verfahren zum Betreiben einer Anlage zur Herstellung und/ oder Handhabung von Zement und Zementklinker bereitzustellen, wobei ein Zementklinker herstellbar ist, der zur Verwendung als Porenbeton geeignet oder als Beton reich an Luftporen geeignet ist ohne die Formgebung der Betonbauteile nachteilig durch eine unerwünschte Volumenzunahme zu beeinflussen.

Diese Aufgabe wird erfindungsgemäß durch eine Vorrichtung mit den Merkmalen des unabhängigen Verfahrensanspruchs 1 und durch ein Verfahren mit den Merkmalen des unabhängigen Vorrichtungsanspruchs 10 gelöst. Vorteilhafte Weiterbildungen ergeben sich aus den abhängigen Ansprüchen und der Beschreibung.

Ein Verfahren zum Betreiben einer Anlage zur Herstellung und/ oder Handhabung von Zement umfasst nach einem ersten Aspekt die Schritte:

- Entnehmen einer Materialprobe von Zement aus einer Anlage zur Herstellung und/ oder Handhabung von Zement,
- eine vorzugsweise überstöchiometrische Dosierung eines Aktivierungsfluids zu der Materialprobe,
- Ermitteln des Gasdrucks und/ oder der Menge an Wasserstoffgas und/ oder der Menge an elementarem Aluminium in dem Gemisch aus dem Aktivierungsfluid und der Materialprobe
- Steuern! Regeln des Brennstoffaustrags aus einem Brennstofflager zur Zuführung in eine Feuerungseinrichtung der Anlage zur Herstellung von Zement in Abhängigkeit des ermittelten Gasdrucks und/ oder der ermittelten Menge an Wasserstoffgas und/oder elementarem Aluminium oder
- Steuern! Regeln des Zementaustrags aus einem Zementlager zur Zuführung in eine Handhabungseinrichtung der Anlage zur Handhabung von Zement in Abhängigkeit des ermittelten Gasdrucks und/ oder der ermittelten Menge an Wasserstoffgas und/oder elementarem Aluminium.

Der Begriff Zement umfasst vorzugsweise auch Zementklinker und/oder eine Mischung von Zementklinker und Zementzusatzstoffen, wie Sulfatträger oder Kompositmaterial, insbesondere Kalkstein, Flugaschen, Hüttensand. Unter einer Anlage zur Herstellung von Zement ist eine Anlage zur Herstellung von Portlandzementklinker oder auch eine Anlage zur Herstellung von Klinkern abweichender Klinkerzusammensetzungen zum Beispiel Klinker auf Calciumsulfoaluminatbasis oder eine Anlage zur Herstellung eines gebrannten Vorprodukts für Bindemittel aus Mischungen von gebrannten Kalken und Puzzolanen zu verstehen. Des Weiteren kann das Verfahren in Anlagen ohne eigene Klinkerherstellung für die Herstellung von Zement aus angeliefertem Klinker, Sulfatträger und Zumahlstoffen eingesetzt werden. Unter einer Handhabungseinrichtung ist beispielsweise eine Zerkleinerungseinrichtung zum Mahlen oder Brechen des Zements, insbesondere des Zementklinkers oder eine Mischanlage zum Mischen eines Zements aus Zementklinker und Zusatzstoffen oder unterschiedlichen Zementen zu verstehen.

Eine Anlage zur Herstellung von Zement umfasst vorzugsweise einen Vorwärmer, in den Zementrohmehl aufgegeben und im Gegenstrom mit Heißgasen vorgewärmt wird. Der Vorwärmer weist insbesondere eine Mehrzahl von Zyklonstufen auf, wobei die Zyklone zur Abscheidung von Feststoffen aus dem Gasstrom dienen. Zwischen der in Strömungsrichtung des Rohmehl letzten und vorletzten Zyklonstufe ist ein Kalzinator zur Vorkalzinierung des Rohmehls angeordnet. Der Kalzinator weist eine Kalzinatorfeuerung auf, der beispielsweise ein Sekundärbrennstoff, wie Abfall, zugeführt wird. Das den Vorwärmer verlassende vorgewärmte Zementrohmehl wird einem Ofen, insbesondere einem Drehrohrofen, zugeführt und in diesem zu Zementklinker gebrannt. Die Wärmezufuhr im Ofen erfolgt vorzugsweise über einen Brenner, der mit verschiedensten sogenannten Regelbrennstoffen (beispielsweise Gas, Kohle, Öl) und/oder sogenannten Sekundärbrennstoffen (beispielsweise Abfälle, Lösungsmittel, Siedlungsabfälle) betrieben werden kann. Insbesondere Abfälle und Siedlungsabfälle enthalten auch erhebliche Anteile an elementarem Aluminium zum Beispiel aus Verbundverpackungen.

Das bei Verbrennung gebildete Ofenabgas wird zumindest teilweise in den Vorwärmer eingeleitet und durchströmt diesen im Gegenstrom zu dem vorzuwärmenden Rohmehl. Im Anschluss an den Ofen wird der gebannte Zementklinker in einem Klinkerkühler gekühlt und optional zerkleinert.

Eine Anlage zur Handhabung von Zement umfasst beispielsweise eine Handhabungseinrichtung, insbesondere ein Mischlager, vorzugsweise ein Zementlager, oder eine Zerkleinerungseinrichtung, wie beispielsweise eine Mahlanlage oder eine Brechanlage, der der Zement, insbesondere der Zementklinker zur Zerkleinerung zugeführt wird. Eine solche Anlage kann beispielsweise Teil einer voran beschriebenen Anlage zur Zementherstellung sein. Die Probenahme zur Entnahme einer Probe oder einer manuell gezogenen Probe kann beispielsweise an dem Ofenauslauf, dem Klinkerkühler oder aus den Transportwegen für Zement, insbesondere Zementklinker vom Ofen zum Klinkerlager oder zu einem Zementlager erfolgen. Des Weiteren kann das Verfahren in Anlagen ohne eigene Klinkerherstellung für die Herstellung von Zement aus angeliefertem Klinker, Sulfatträger und Zumahlstoffen eingesetzt werden.

Die vorzugsweise zerkleinerte Materialprobe wird beispielsweise aus der Handhabungseinrichtung oder dem Kühler einer Anlage zur Herstellung von Zement entnommen und in einen Probebehälter eingeführt. Der Probebehälter ist vorzugsweise verschließbar. Das Aktivierungsfluid wird vorzugsweise mittels einer Dosiereinrichtung in ausreichender Menge vorzugsweise überstöchiometrisch in den Probebehälter dosiert. Die Dosierung kann abweichend auch durch eine getrennte Aufgabe von Alkalihydroxid Pulver oder Tabletten mit Wasser erfolgen. Die Probe wird beispielsweise durch Vibration oder Schütteln vor oder nach der Zugabe des Aktivierungsfluids homogenisiert. Anschließend wird der Gasdruck innerhalb des Probebehälters ermittelt. Vorzugsweise erfolgt die Druckmessung oder die Wasserstoffgasbestimmung kontinuierlich ab der Zugabe des Aktivierungsfluids in den Behälter. Während der Druck- oder Wasserstoffgasbestimmung ist der Probenbehälter vorzugsweise verschlossen und der Detektor direkt oder über eine Verbindung, wie beispielsweise ein Schlauch, mit dem Probenbehältervolumen verbundenen. In den bekannten und häufig in der Zementindustrie eingesetzten chemischen analytischen Verfahren auf Basis von Röntgenstrahlen kann nicht zwischen oxydischem Aluminium, das ein Hauptbestandteil in Klinker ist und unvollständig oxidiertem elementaren Aluminium unterschieden werden.

Das Ermitteln des Gasdrucks erfolgt vorzugsweise über eine Druckmesssonde oder andere bekannte Messeinrichtungen zur Ermittlung des Gasdrucks. Die Ermittlung der Menge an Wasserstoffgas erfolgt vorzugsweise über eine Volumenstrommessung oder andere bekannte Messeinrichtungen zur Ermittlung einer Gasmenge.

Eine Steuerung/ Regelung des Brennstoffaustrags oder des Zementaustrags in Abhängigkeit des ermittelten Gasdrucks und/ oder der ermittelten Menge an Wasserstoffgas und/oder elementarem Aluminium ermöglichte eine einfache und relativ schnelle Anpassung des Brennstoffaustrags oder des Zementaustrags an die an das Endprodukt gestellten Anforderungen hinsichtlich der Luftporenbildung. Es wird mit einem solchen Verfahren sichergestellt, dass das Zwischenprodukt oder das Endprodukt einen Gehalt an elementaren Aluminium aufweist, der für Porenbeton oder für die Herstellung luftporenreicher Betone verwendbar ist, und gleichzeitig aber nicht die Formgebung der Bauteile durch einen unkontrollierten Volumenzuwachs negativ beeinflusst.

Gemäß einer ersten Ausführungsform ist das Aktivierungsfluid eine Alkalihydroxidlösung, beispielsweise Kaliumhydroxidlösung und/ oder Natriumhydroxidlösung oder eine Lauge. Das Aktivierungsfluid reagiert zusammen mit dem Probematerial unter anderem zu Wasserstoffgas. Eine Reaktionsgleichung der Reaktion des Zementklinkers oder des vorkalzinierten Rohmaterials des Probematerials mit dem Aktivierungsfluid ist folgende:

$$Al + \ KOH + 3\ H_2O = 1\ K[Al(OH)_4] + 1.5\ H_2\ (1)$$

Die Verwendung einer Alkalihydroxidlösung oder eine Lauge ermöglicht die Ermittlung des bei der oben angegebenen Reaktion entstehenden Wasserstoffgasmenge mittels welcher Rückschlüsse auf den Anteil an elementarem Aluminium in der Probe getroffen werden können.

Gemäß einer weiteren Ausführungsform wird aus der ermittelten Menge an Wasserstoffgas die Menge an elementarem Aluminium in der Materialprobe berechnet wird. Vorzugsweise ist der Anteil an elementarem Aluminium über einen linearen Zusammenhang zu der ermittelten Wasserstoffgasmenge zu berechnen. Es bilden sich vorzugsweise pro Mol elementares Aluminium 1.5 Mol Wasserstoffgas. Eine zur Berechnung des Anteils an Aluminium in der Probe mögliche Rechenoperation, lautet wie folgt:

$$Al \; [g] = (H2 \; [l] \; / \; 33.6 \; [l]) * 26.9815 \; [g]$$

Die Rechenoperation zur Quantifizierung des elementaren Aluminiums kann direkt in einem Prozessor an der Analyseeinrichtung oder nach Übermittlung der Rohdaten in einem direkt an den Detektor angeschlossenen Rechnersystem erfolgen.

Gemäß einer weiteren Ausführungsform wird die Menge an elementarem Aluminium des Brennstoffaustrags oder des Zementaustrags gesteuert/ geregelt. Vorzugsweise wird der Brennstoffaustrag aus einer Mischung unterschiedlicher Brennstoffe gebildet, wobei diese jeweils einen bekannten Anteil an Aluminium aufweisen. Bei der Steuerung/Regelung wird vorzugsweise der Anteil der unterschiedlichen Brennstoffe zur Ausbildung des Brennstoffaustrags variiert, sodass die Menge an elementarem Aluminium in dem Brennstoffaustrag erhöht oder verringert wird vorzugsweise mit dem Ziel einen Zement, insbesondere einen Zementklinker, mit einem gewünschten Gehalt an elementarem Aluminium zu erzeugen. Bei der Steuerung/ Regelung des Zementaustrags verhält es sich ähnlich. Vorzugsweise wird der Zementaustrag aus einer Mischung unterschiedlicher Zemente, Insbesondere Zementklinker und/ oder Klinkerzusatzstoffe, gebildet, wobei diese jeweils einen bekannten Anteil an Aluminium aufweisen. Bei der Steuerung/Regelung wird vorzugsweise der Anteil der unterschiedlichen Zemente zur Ausbildung des Zementaustrags variiert, sodass die Menge an elementarem Aluminium in dem Zement erhöht oder verringert wird vorzugsweise mit dem Ziel einen Zement mit einem gewünschten Gehalt an elementarem Aluminium zu erzeugen.

Gemäß einer weiteren Ausführungsform wird der nach vorzugsweise überstöchiometrischer Zugabe des Aktivierungsmittels ermittelte Gasdruck, die Menge an Wasserstoff und/ oder die Menge des vorzugsweise damit ermittelten Gehalts an elementarem Aluminium mit einem jeweiligen Grenzwert verglichen und bei einer Abweichung des ermittelten Gasdrucks, der Menge an Wasserstoffgas und/ oder der Menge an elementarem Aluminium von dem Grenzwert, die Menge an elementarem Aluminium in dem Brennstoffaustrag oder dem Zementaustrag erhöht oder verringert. Dabei können sowohl die Beiträge verschiedener Brennstoffe so angepasst werden, dass ein Sollwert eingehalten wird oder aber es kann gezielt zum Beispiel eine Vorrichtung zu Aufgabe von elementarem Aluminium in den Zementklinkerherstellungsprozess geregelt werden. Vorzugsweise ist für den Gasdruck, die Menge an Wasserstoffgas und/ oder der Menge an elementarem Aluminium jeweils ein vorbestimmter Grenzwert insbesondere in der Analyseeinrichtung hinterlegt.

Beispielsweise wird die Menge an elementarem Aluminium des Brennstoffaustrags erhöht, wenn der Gasdruck den Gasdruck-Grenzwert unterschreitet. Die Menge an elementarem Aluminium des Brennstoffaustrags wird vorzugsweise erhöht, wenn die Menge an Wasserstoffgas oder die Menge an elementarem Aluminium den entsprechenden Grenzwert unterschreitet. Beispielsweise wird die Menge an elementarem Aluminium des Brennstoffaustrags verringert, wenn der Gasdruck den Gasdruck-Grenzwert überschreitet. Die Menge an elementarem Aluminium des Brennstoffaustrags wird vorzugsweise verringert, wenn die Menge an Wasserstoffgas oder die Menge an elementarem Aluminium den entsprechenden Grenzwert überschreitet.

In einer weiteren Ausgestaltung sind die Gehalte an elementarem Aluminium einzelner Brennstoffe nicht eindeutig bekannt. In diesem Fall kann auch mit einer sogenannten adaptiven Mischungsregelung verfahren werden. Mit jeder Messung wird zunächst ein Ist-Zustand erfasst. Mit diesem Istzustand kann eine Regelung zu einem Sollzustand der Folgeanalyse auf Basis einer bekannten Schätzung des Gehalts an elementarem Aluminium in den bekannten Brennstoffen ausgelöst werden. Mit der Folgeanalyse wird eine Abweichung zwischen der erwarteten Änderung der Gehalte an elementarem Aluminium auf Basis der älteren Schätzung der Gehalte an elementarem Aluminium in den Brennstoffen oder den Zementen und der tatsächlich erzielten Änderung der Gehalte an elementarem Aluminium ermittelt. Aus dem Unterschied der erwarteten Änderung an elementarem Aluminium und dem neuen Istwert für elementares Aluminium der Folgeanalyse kann für jeden der an der Regelung beteiligten Brennstoffe oder Zemente eine neue verbesserte Abschätzung des Gehaltes an elementarem Aluminium abgeleitet werden. Mit dieser neuen verbesserten Schätzung werden die folgenden Regeleingriffe bearbeitet, bis eine verbesserte in der Regel aktuellere Schätzung vorliegt.

Gemäß einer weiteren Ausführungsform wird die Materialprobe aus einem Vorwärmer und/ oder einem Kühler der Anlage zur Herstellung von Zementklinker entnommen. Es ist ebenfalls denkbar, dass die Materialprobe aus oder im Anschluss an eine Handhabungseinrichtung einer Anlage zur Handhabung von Zementklinker entnommen wird.

Die Menge an Wasserstoffgas in der Materialprobe wird gemäß einer weiteren Ausführungsform kontinuierlich ermittelt, bis keine weitere Erhöhung des Gasdrucks oder der Wasserstoffgaskonzentration beobachtet oder über einen Zeitraum von etwa 2 bis 240 Minuten, vorzugsweise 2 bis 45 Minuten, höchstvorzugsweise 45 bis 240 Minuten, insbesondere mehr als 240 Minuten ermittelt. Wird während der Messung nur noch eine geringe Zunahme des Gasdrucks oder der Wasserstoffkonzentration über die Zeit beobachtet, kann die Messung auch abgebrochen werden und das letzte Ergebnis als Messwert übernommen werden. Die Messung soll vorzugweise über 2 - 45 Minuten erfolgen und kann wenn eine unvollständige Umsetzung zum Beispiel durch eine grobe Kornverteilung vermutet wird, auf 45-240 Minuten verlängert oder beispielsweise über 240 Minuten hinaus verlängert werden. Dies ermöglicht eine relativ schnelle Steuerung/ Regelung des Brennstoffaustrags oder des Zementaustrags im laufenden Zementherstellungsprozess.

Gemäß einer weiteren Ausführungsform wird der Brennstoffaustrag aus einer Mehrzahl von Brennstoffen mit unterschiedlichen Anteilen an elementarem Aluminium hergestellt. Der Zementaustrag wird vorzugsweise aus einer Mehrzahl von Zementen mit unterschiedlichen Anteilen an elementarem Aluminium hergestellt.

Die Erfindung umfasst auch eine Anlage zur Herstellung und/ oder Handhabung von Zement. Die Anlage umfasst vorzugsweise zumindest ein Brennstofflager oder Zementlager mit einem Auslass zum Auslassen eines Brennstoffaustrags aus dem Brennstofflager oder eines Zementaustrags aus dem Zementlager. Die Anlage weist des Weiteren eine Feuerungseinrichtung, die mit dem Brennstofflager zur Zuführung des Brennstoffaustrags verbunden ist und/oder eine Handhabungseinrichtung auf, die mit dem Zementlager zur Zuführung des Zementaustrags verbunden ist. Außerdem umfasst die Anlage eine Analyseeinrichtung zur Analyse einer Materialprobe, die derart mit dem Auslass des Brennstofflagers oder des Zementlagers verbunden ist, dass sie den Brennstoffaustrag aus dem Brennstofflager oder den Zementaustrag aus dem Zementlager steuert/ regelt. Die Analyseeinrichtung ist derart ausgebildet, dass sie die Menge an Wasserstoffgas und/ oder den Gasdruck in der Materialprobe ermittelt und den Brennstoffaustrag oder den Zementaustrag in Abhängigkeit der ermittelten Menge an Wasserstoffgas und/ oder des ermittelten Gasdrucks steuert/ regelt.

Die mit Bezug auf das Verfahren beschrieben Ausführungen und Vorteile treffen in vorrichtungsgemäßer Entsprechung ebenfalls auf die Anlage zur Herstellung und/ oder Handhabung von Zementklinker zu.

Die Analyseeinrichtung ist vorzugsweise derart ausgebildet ist, dass sie die Menge an Wasserstoffgas und/ oder den Gasdruck in der Materialprobe ermittelt und den Brennstoffaustrag oder den Zementaustrag in Abhängigkeit der ermittelten Menge an Wasserstoffgas und/ oder des ermittelten Gasdrucks steuert/ regelt.

Die Analyseeinrichtung umfasst vorzugsweise eine Dosiereinheit zur vorzugsweise überstöchiometrischen Dosierung des Aktivierungsfluids in die Materialprobe 42, insbesondere den Probenbehälter. Die Analyseeinrichtung umfasst insbesondere einen Drucksensor zur Ermittlung des Gasdrucks in dem Probematerial, insbesondere des Gasdrucks innerhalb des Probebehälters. Die Analyseeinrichtung umfasst des Weiteren oder alternativ einen Detektor zur Detektion von Wasserstoffgas, insbesondere zur Bestimmung der Menge an in der Materialprobe enthaltenem Wasserstoffgas.

Gemäß einer Ausführungsform ist die Analyseeinrichtung derart ausgebildet, dass sie die Menge an elementarem Aluminium in dem Probematerial aus der ermittelten Menge an Wasserstoffgas berechnet.

Gemäß einer weiteren Ausführungsform ist die Analyseeinrichtung derart ausgebildet, dass sie die Menge an elementarem Aluminium des Brennstoffaustrags in Abhängigkeit der ermittelten Menge an Wasserstoffgas und/ oder des ermittelten Gasdrucks steuert/ regelt.

Gemäß einer weiteren Ausführungsform umfasst das Brennstofflager eine Mehrzahl von Brennstoffen, die in separaten Bereichen oder Lagern innerhalb des Brennstofflagers angeordnet sind. Vorzugsweise sind die Brennstoffe separat aus dem Brennstofflager entnehmbar, sodass der Brennstoffaustrag aus einer vorbestimmten Menge unterschiedlicher Brennstoffe gebildet werden kann. Vorzugsweise umfasst das Zementlager eine Mehrzahl von Zementen, die in separaten Bereichen oder Lagern innerhalb des Zementlagers angeordnet sind. Vorzugsweise sind die Zemente separat aus dem Zementlager entnehmbar, sodass der Zementaustrag aus einer vorbestimmten Menge unterschiedlicher Zementen gebildet werden kann.

**Beschreibung der Zeichnungen**

Die Erfindung ist nachfolgend anhand mehrerer Ausführungsbeispiele mit Bezug auf die beiliegenden Figuren näher erläutert.

Fig. 1 zeigt eine schematische Darstellung eines Ausschnitts einer Anlage zur Herstellung von Zementklinker gemäß einem Ausführungsbeispiel.

Fig. 2 zeigt eine schematische Darstellung eines Ausschnitts einer Anlage zur Handhabung von Zementklinker gemäß einem weiteren Ausführungsbeispiel.

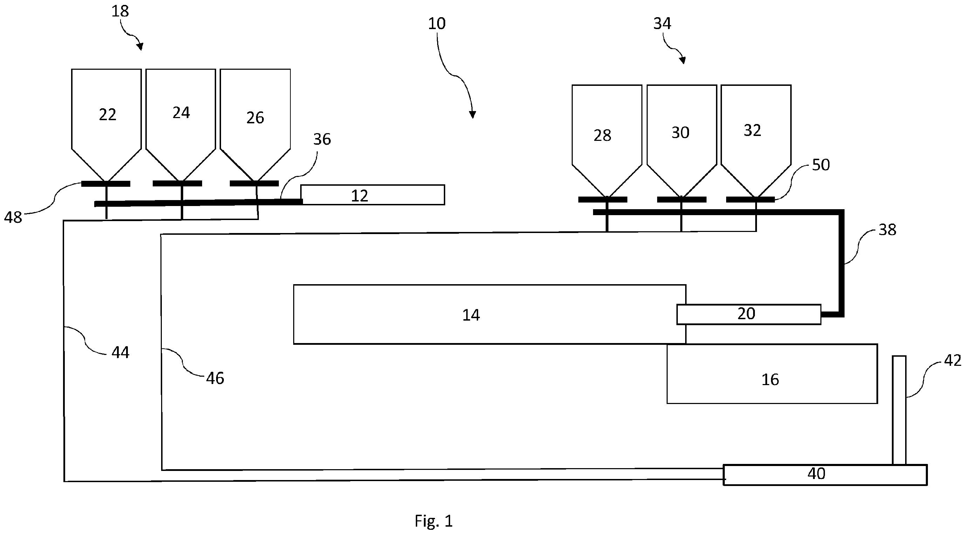

Fig. 1 zeigt einen Ausschnitt einer Anlage 10 zur Herstellung von Zementklinker. In Fig. 1 ist der Einfachheit halber lediglich ein Kalzinator 12, ein Ofen 14 und ein sich an den Drehrohrofen 14 anschließender Kühler 16 dargestellt. Die Anlage 10 zur Herstellung von Zementklinker weist vorzugsweise einen Vorwärmer zum Vorwärmen von Rohmehl auf. Der Vorwärmer umfasst beispielsweise eine Mehrzahl von stufenweise zueinander angeordneten Zyklonen zur Abscheidung von Feststoffen aus dem durch den Vorwärmer strömenden Feststoff- Gasgemisch. Zwischen der vorletzte und der letzten Zyklonstufe des Vorwärmers ist vorzugsweise der Kalzinator 12 angeordnet und dient zur Kalzinierung des vorgewärmten Rohmehls. Der Kalzinator 12 weist insbesondere eine Kalzinatorfeuerung auf, der ein erster Brennstoff 22 - 26 aus einem ersten Brennstofflager 18 zugeführt wird. An den Vorwärmer schließt sich in Strömungsrichtung des Rohmehl der Ofen 14, insbesondere ein Drehrohrofen, an. In dem Drehrohrofen 14 wird das vorgewärmte Rohmehl zu Zementklinker gebrannt. Der Ofen 14 weist eine Ofenfeuerung 20 auf, der ein zweiter Brennstoff 28-32 aus einem zweiten Brennstofflager 34 zugeführt wird. Das aus dem Ofen 14 austretende Heißgas wird in den Vorwärmer geleitet und durchströmt diesen im Gegenstrom zu dem vorzuwärmenden Rohmehl.

An den Ofen 14 schließt sich ein Kühler 16 zum Kühlen des gebrannten Zementklinkers an. Bei dem Kühler 16 handelt es sich beispielsweise um einen Rostkühler, in dem Rohmehl im Querstrom gekühlt und dabei in Förderrichtung gefördert wird.

Beispielhaft ist der Kalzinator 12 mit dem ersten Brennstofflager 18 und der Ofen 14 mit dem zweiten Brennstofflager 34 verbunden, sodass der Brennstoff 22 - 26 aus dem ersten Brennstofflager 18 dem Kalzinator 12 und der Brennstoff 28 - 32 aus dem zweiten Brennstofflager 34 dem Ofen 14zugeführt wird. Es ist ebenfalls denkbar, dass die Anlage 10 lediglich ein Brennstofflager aufweist, dass sowohl mit dem Kalzinator 12 als auch mit dem Ofen 14 zur Beschickung mit Brennstoff verbunden ist. Jedes Brennstofflager 18, 34 weist vorzugsweise eine Mehrzahl von Brennstoffen 22- 32 auf, die unterschiedliche Eigenschaften, insbesondere Zusammensetzungen, insbesondere auch unterschiedliche Zusammensetzungen und Menge der jeweiligen unbrennbaren Rückstände, den sogenannten Brennstoffaschen, aufweisen. Vorzugsweise sind die Brennstoffe 22- 32 in unterschiedlichen Bereichen des jeweiligen Brennstofflagers 18, 34 oder in jeweils separaten Lagern gelagert, sodass ein gezielter Abzug eines gewünschten Brennstoffs 22-32 aus dem Brennstofflager 18, 34 möglich ist.

Beispielhaft weist jedes der Brennstofflager 18, 34 zumindest drei unterschiedliche Brennstoffe 22-32 auf. Das erste Brennstofflager 18 weist beispielsweise einen Brennstoff 22 auf, der einen relativ zu den übrigen Brennstoffen 24, 26 erhöhten Anteil an elementarem Aluminium aufweist. Des Weiteren weist das erste Brennstofflager 18 beispielsweise einen Brennstoff 24 auf, der einen relativ zu den übrigen Brennstoffen 22, 26 geringeren Anteil an elementarem Aluminium aufweist. Das erste Brennstofflager 18 weist außerdem beispielsweise einen Brennstoff 26 auf, der einen Regelbrennstoff darstellt und vorzugsweise einen Anteil an elementarem Aluminium aufweist, der geringer als der des Brennstoffs 22 mit erhöhtem Anteil an elementarem Aluminium und höher als der Brennstoff 24 mit geringerem Anteil an elementarem Aluminium ist. Der aus dem ersten Brennstofflager 18 ausgetragene erste Brennstoffaustrag 36 ist eine Mischung aus den Brennstoffen 22, 24, 26 des ersten Brennstofflagers 18.

Das zweite Brennstofflager 34 weist beispielsweise einen Brennstoff 28 auf, der einen relativ zu den übrigen Brennstoffen 30, 32 erhöhten Anteil an elementarem Aluminium aufweist. Des Weiteren weist das zweite Brennstofflager 34 beispielsweise einen Brennstoff 30 auf, der einen relativ zu den übrigen Brennstoffen 28, 32 geringeren Anteil an elementarem Aluminium aufweist. Das zweite Brennstofflager 34 weist außerdem beispielsweise einen Brennstoff 32 auf, der einen Regelbrennstoff darstellt und vorzugsweise einen Anteil an elementarem Aluminium aufweist, der geringer als der des Brennstoffs 28 mit erhöhtem Anteil an elementarem Aluminium und höher als der Brennstoff 30 mit geringerem Anteil an elementarem Aluminium ist. Der aus dem zweiten Brennstofflager 34 ausgetragene zweite Brennstoffaustrag 38 ist eine Mischung aus den Brennstoffen 28, 30, 32 des zweiten Brennstofflagers 34.

Vorzugsweise umfassen die Brennstoffe 22 - 32 Ersatzbrennstoffe, wie beispielsweise Abfall, der vorzugsweise einen Anteil an Verbundverpackungen mit einem hohen Gehalt an elementarem Aluminium aufweist. Die Brennstoffe 22 - 32 weisen beispielsweise unterschiedliche Gehalte an elementarem Aluminium auf, die insbesondere in der Analyseeinrichtung 40 hinterlegt sind. Der erste Brennstoffaustrag 36 wird beispielhaft dem Kalzinator 12 und der zweite Brennstoffaustrag 38 der Ofenfeuerung 20 zugeführt.

Die Anlage 10 umfasst auch eine Analyseeinrichtung 40 zur Analyse einer Materialprobe. Der Analyseeinrichtung 40 wird vorzugsweise eine Materialprobe 42 zugeführt. Die Materialprobe 42 umfasst vorzugsweise aus dem Kalzinator 12 und/ oder dem Kühler 16 entnommenes Material. Es ist ebenfalls denkbar, dass die Materialprobe 42 aus dem Ofen 14 entnommenes Material umfasst. Das Probematerial 42, insbesondere der aus der Anlage 10 entnommene Zementklinker und/ oder das vorkalzinierte Rohmaterial, wird vorzugsweise in einem Probebehälter gelagert. Insbesondere wird das Probematerial durch eine Mischvorrichtung der Analyseeinrichtung homogenisiert. Die Anlage 10 umfasst vorzugsweise eine in Fig. 1 nicht dargestellte Probenahmevorrichtung, die derart ausgebildet ist, dass sie eine Materialprobe an einem vorabbestimmten Ort in der Anlage entnimmt. Die Probenahmevorrichtung kann beispielsweise automatisiert oder manuell betrieben werden.

Die Analyseeinrichtung 40 umfasst insbesondere einen Drucksensor zur Ermittlung des nach der Aktivierung durch eine Aktivierungsflüssigkeit, wie beispielsweise KOH-Lösung/,NaOH-Lösung, in dem Behälter mit dem Probematerial herrschenden Gasdrucks, insbesondere des Gasdrucks innerhalb des Probebehälters. Die Analyseeinrichtung 40 umfasst des Weiteren oder alternativ einen Detektor zur Detektion von Wasserstoffgas, insbesondere zur Bestimmung der Menge an in der Materialprobe 42 nach Aktivierung mit einer Aktivierungsflüssigkeit enthaltenen enthaltenem Wasserstoffgas. Vorzugsweise umfasst die Analyseeinrichtung 40 eine Dosiereinheit zur vorzugsweise überstöchiometrischen Dosierung eines Aktivierungsfluids, wie beispielsweise Alkalihydroxidlösung oder eine Lauge in die Materialprobe 42, insbesondere den Probenbehälter. Vorzugsweise ist die Analyseeinrichtung 40 derart ausgebildet, dass sie die Menge an Wasserstoffgas und/ oder die Menge an elementarem Aluminium in der Materialprobe ermittelt. Dazu wird dem Probematerial vorzugsweise mittels der Dosiereinheit das Aktivierungsfluid überstöchiometrisch zugeführt. Bei dem Aktivierungsfluid handelt es sich beispielsweise um eine alkalihydroxidhaltige Lösung, wie beispielsweise Kaliumhydroxidlösung und/ oder Natriumhydroxidlösung. Das Aktivierungsfluid reagiert zusammen mit dem Probematerial unter anderem zu Wasserstoffgas.. Es ist aber auch denkbar, dass Alkalihydroxid als Pulver oder Tablette und Wasser der Probe getrennt zudosiert werden. Eine Reaktionsgleichung der Reaktion des Zementklinkers oder des vorkalzinierten Rohmaterials des Probematerials mit dem Aktivierungsfluid ist folgende:

$$Al + KOH + 3\ H2O = K[Al(OH)4] + 1.5\ H2\ (1)$$

Die Analyseeinrichtung 40 ist vorzugsweise derart ausgebildet, dass sie mittels des Detektors die Menge an bei der obigen Reaktion entstehendem Wasserstoffgas ermittelt. Die Menge an Wasserstoffgas ist ein Maß für das in der Materialprobe 42 enthaltene elementare Aluminium. Die Analyseeinrichtung 40 berechnet aus der ermittelten Menge an Wasserstoffgas vorzugsweise über eine in der Analyseeinrichtung oder in einem angeschlossenem Rechnersystem 40 hinterlegte Rechenoperation, die Menge an elementarem Aluminium in der Materialprobe 42. Die Menge an Wasserstoffgas in dem Probematerial wird vorzugsweise über einen Zeitraum von etwa 2 - 60 Minuten kontinuierlich, bevorzugt über 60-240 Minuten und beispielsweise über einen Zeitraum länger als 240 Minuten bestimmt.

Die Analyseeinrichtung 40 ist vorzugsweise mit dem ersten und/ oder dem zweiten Brennstofflager 18, 34 zur Steuerung/ Regelung des ersten und/ oder zweiten Brennstoffaustrags 36, 38 verbunden. Vorzugsweise wird der Brennstoffaustrag 36, 38, insbesondere die Menge an Brennstoffaustrag 36, 38 und/ oder die Materialzusammensetzung des Brennstoffaustrags 36, 38 und/ oder die Menge an elementarem Aluminium in dem Brennstoffaustrag 36, 38 in Abhängigkeit der mittels der Analyseeinrichtung 40 ermittelten Menge an Wasserstoffgas und/ oder elementarem Aluminium in der Materialprobe 42 gesteuert/ geregelt.

Vorzugsweise ist die Analyseeinrichtung 40 derart ausgebildet, dass sie den ermittelten Gasdruck, die ermittelte Menge an Wasserstoffgas und/ oder die ermittelte Menge an elementarem Aluminium mit einem jeweiligen vorabbestimmten Grenzwert vergleicht. Weicht der ermittelte Gasdruck, die ermittelte Menge an Wasserstoffgas und/ oder die ermittelte Menge an elementarem Aluminium von dem jeweiligen Grenzwert ab, wird die Menge an elementarem Aluminium in dem Brennstoffaustrag 36, 38 erhöht oder verringert. Beispielsweise wird die Menge an elementarem Aluminium in dem Brennstoffaustrag 36, 38 verringert, wenn der Gasdruck den Gasdruck-Grenzwert überschreitet. Der Gehalt an elementarem Aluminium des Brennstoffaustrags 36 38 wird beispielswiese erhöht, wenn der Gasdruck den Gasdruck-Grenzwert unterschreitet.

Vorzugsweise werden die Auslassöffnungen der Lager der unterschiedlichen Brennstoffe 22 - 32 in Abhängigkeit der ermittelten Menge an elementarem Aluminium und/ oder des Gasdrucks gesteuert/ geregelt. In Fig. 1 sind die Lager der Brennstoffe 22-32 über Datenleitungen 44, 46 mit der Analyseeinrichtung 40 verbunden. Der Brennstoffaustrag 36, 38 wird vorzugsweise aus bestimmten Anteilen der unterschiedlichen Brennstoffe 22 - 26 und 28 bis 32 gebildet, wobei diese jeweils über Wiegeeinrichtungen 48, 50 abgewogen und anschließend als Brennstoffaustrag 36, 38 dem Kalzinator 12 oder der Ofenfeuerung 20 zugeführt werden.

Es ist ebenfalls denkbar, dass die Analyseeinrichtung 40 zur Steuerung/ Regelung des Brennstoffaustrags 36, 38 mit der jeweiligen Wiegeeinrichtung 48, 50 verbunden ist.

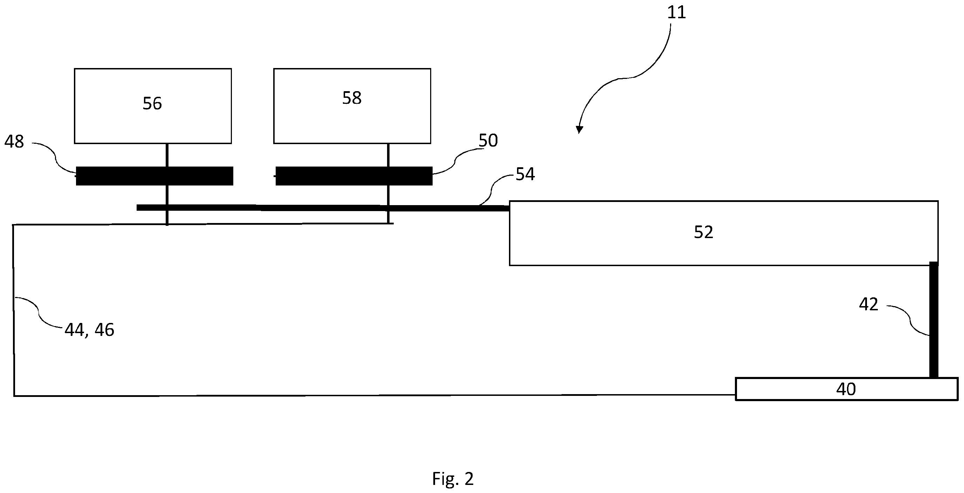

Fig. 2 zeigt einen Ausschnitt einer Anlage 11 zur Handhabung von Zement. Die Anlage 11 weist eine Handhabungseinrichtung 52, wie beispielsweise eine Zerkleinerungseinrichtung zum Mahlen oder Brechen des Zements, insbesondere des Zementklinkers oder eine Mischanlage zum Mischen eines Zements aus Zementklinker und Zusatzstoffen oder unterschiedlichen Zementen auf. In Fig. 2 sind Elemente, die im Wesentlichen denen in Fig. 1 entsprechen mit gleichen Bezugszeichen gekennzeichnet. Die Anlage 11 weist zwei Zementlager 56, 58 auf, die jeweils einen Zement enthalten, wobei einer der Zemente, beispielsweise der Zement des ersten Zementlagers 56 einen geringeren Anteil an elementarem Aluminium aufweist als der andere Zement des zweiten Zementlagers 58.

Die Anlage 11 weist des Weiteren eine Analyseeinrichtung 40, auf die zur Analyse einer Materialprobe 42 wie mit Bezug auf Fig. 1 beschrieben ausgebildet ist. Die Materialprobe 42 des Ausführungsbeispiels der Fig. 2 wird beispielsweise der Handhabungseinrichtung 52 entnommen und mittels der Analyseeinrichtung 40 analysiert. Der Zementaustrag 60 zur Zuführung in die Handhabungseinrichtung 52 wird vorzugsweise in Abhängigkeit der mittels der Analyseeinrichtung 40 ermittelten Werte, wie mit Bezug auf Fig. 1 beschrieben, gesteuert/ geregelt.

Die in Fig. 1 und 2 beschriebenen Anlagen 10, 11 ermöglichen eine gezielte Einstellung des Anteils an elementarem Aluminium in einem Zementklinker, wobei die Steuerung/ Regelung des Brennstoffaustrags, insbesondere des Anteils an elementarem Aluminium in dem Brennstoffaustrag, während des Zementherstellungs- oder Handhabungsprozesses erfolgt.

**Bezugszeichenliste**

| | |
|---|---|
| 10 | Anlage zur Herstellung von Zementklinker |
| 11 | Anlage zur Handhabung von Zementklinker |
| 12 | Kalzinator |
| 14 | Ofen |
| 16 | Kühler |
| 18 | erstes Brennstofflager |
| 20 | Ofenfeuerung |
| 22 | erster Brennstoff mit erhöhtem Anteil an elementarem Aluminium |
| 24 | erster Brennstoff mit geringerem Anteil an elementarem Aluminium |
| 26 | erster Brennstoff mit mittlerem Anteil an Aluminium (Regelbrennstoff) |
| 28 | zweiter Brennstoff mit erhöhtem Anteil an elementarem Aluminium |
| 30 | zweiter Brennstoff mit geringerem Anteil an elementarem Aluminium |
| 32 | zweiter Brennstoff mit mittlerem Anteil an Aluminium (Regelbrennstoff) |
| 34 | zweites Brennstofflager |
| 36 | erster Brennstoffaustrag |
| 38 | zweiter Brennstoffaustrag |
| 40 | Analyseeinrichtung |
| 42 | Materialprobe |
| 44 | Datenleitung |
| 46 | Datenleitung |
| 48 | Wiegeeinrichtungen |
| 50 | Wiegeeinrichtungen |
| 52 | Handhabungseinrichtung |
| 54 | Zementaustrag |
| 56 | erstes Zementlager |
| 58 | zweites Zementlager |

**Patentansprüche**

1. Verfahren zum Betreiben einer Anlage (10, 11) zur Herstellung und/ oder Handhabung von Zement aufweisend die Schritte:

- Entnehmen einer Materialprobe (42) von Zementklinker aus einer Anlage (10, 11) zur Herstellung und/ oder Handhabung von Zement,
- Dosieren eines Aktivierungsfluids zu der Materialprobe (42),
**gekennzeichnet durch**
- Ermitteln des Gasdrucks und/ oder der Menge an Wasserstoffgas und/ oder der Menge an elementarem Aluminium in dem Gemisch aus dem Aktivierungsfluid und der Materialprobe (42), und
- Steuern! Regeln der Brennstoffaustrags (36, 38) aus einem Brennstofflager (18, 34) zur Zuführung in eine Feuerungseinrichtung (12, 14) der Anlage (10,11) zur Herstellung von Zement in Abhängigkeit des ermittelten Gasdrucks und/ oder der ermittelten Menge an Wasserstoffgas und/oder elementarem Aluminium oder
- Steuern! Regeln des Zementaustrags (54) aus einem Zementlager (56, 58) zur Zuführung in eine Handhabungseinrichtung (52) der Anlage (10,11) zur Handhabung von Zement in Abhängigkeit des ermittelten Gasdrucks und/ oder der ermittelten Menge an Wasserstoffgas und/oder elementarem Aluminium.

2. Verfahren nach Anspruch 1, wobei das Aktivierungsfluid eine Alkalihydroxidlösung oder eine Lauge umfasst.

3. Verfahren nach einem der vorangehenden Ansprüche, wobei aus der ermittelten Menge an Wasserstoffgas die Menge an elementarem Aluminium in der Materialprobe (42) berechnet wird.

4. Verfahren nach einem der vorangehenden Ansprüche, wobei die Menge an elementarem Aluminium des Brennstoffaustrags (36, 38) oder des Zementaustrags (54) gesteuert/ geregelt wird.

**5.** Verfahren nach einem der vorstehenden Ansprüche, wobei der ermittelte Gasdruck, die Menge an Wasserstoff und/ oder die Menge an elementarem Aluminium mit einem jeweiligen Grenzwert verglichen wird und bei einer Abweichung des ermittelten Drucks, der Menge an Wasserstoff und/ oder der Menge an elementarem Aluminium von dem Grenzwert, die Menge an elementarem Aluminium in dem Brennstoffaustrag (36, 38) oder dem Zementaustrag (54) erhöht oder verringert wird.

**6.** Verfahren nach einem der vorangehenden Ansprüche, wobei die Materialprobe (42) aus einem Vorwärmer und/ oder einem Kühler der Anlage (10) zur Herstellung von Zementklinker entnommen wird.

**7.** Verfahren nach einem der vorangehenden Ansprüche, wobei die Menge an Wasserstoffgas in der Materialprobe (42) über einen Zeitraum von etwa 2 bis 240 Minuten, vorzugsweise 2 bis 45 Minuten, insbesondere mehr als 240 Minuten ermittelt wird.

**8.** Verfahren nach einem der vorangehenden Ansprüche, wobei der Brennstoffaustrag (36, 38) aus einer Mehrzahl von Brennstoffen (22 - 32) mit unterschiedlichen Anteilen an elementarem Aluminium hergestellt wird.

**9.** Anlage (10, 11) zur Herstellung und/ oder Handhabung von Zementklinker aufweisend

ein Brennstofflager (18, 34) oder ein Zementlager (56, 58) mit einem Auslass zum Auslassen eines Brennstoffaustrags (36, 38) aus dem Brennstofflager (18, 34) oder eines Zementaustrags (54) aus einem Zementlager (56, 58),
eine Feuerungseinrichtung (12, 14), die mit dem Brennstofflager (18, 34) zur Zuführung des Brennstoffaustrags (36, 38; 54) verbunden ist und/oder eine Handhabungseinrichtung (52), die mit dem Zementlager (56, 58) zur Zuführung des Zementaustrags (54) verbunden ist, und
eine Analyseeinrichtung (40) zur Analyse einer Materialprobe (42), die derart mit dem Auslass des Brennstofflagers (18, 34) oder des Zementlagers (56, 58) verbunden ist, dass sie den Brennstoffaustrag (36, 38; 54) aus dem Brennstofflager (18, 34) oder den Zementaustrag (54) aus dem Zementlager (56, 58) steuert/ regelt,
**dadurch gekennzeichnet, dass**
die Analyseeinrichtung (40) derart ausgebildet ist, dass sie die Menge an Wasserstoffgas und/ oder den Gasdruck in der Materialprobe ermittelt und den Brennstoffaustrag (36, 38) oder den Zementaustrag (54) in Abhängigkeit der ermittelten Menge an Wasserstoffgas und/ oder des ermittelten Gasdrucks steuert/ regelt.

**10.** Anlage (10, 11) nach Anspruch 9, wobei die Analyseeinrichtung (40) derart ausgebildet ist, dass sie die Menge an elementarem Aluminium in der Materialprobe (42) aus der ermittelten Menge an Wasserstoffgas berechnet.

**11.** Anlage (10, 11) nach Anspruch 9 oder 10, wobei die Analyseeinrichtung (40) derart ausgebildet ist, dass sie die Menge an elementarem Aluminium des Brennstoffaustrags (36, 38) oder des Zementaustrags (54) in Abhängigkeit der ermittelten Menge an Wasserstoffgas und/ oder des ermittelten Gasdrucks steuert/ regelt.

**12.** Anlage (10, 11) nach einem der Ansprüche 9 bis 11, wobei das Brennstofflager (18, 34) eine Mehrzahl von Brennstoffen umfasst, die in separaten Bereichen oder Lagern innerhalb des Brennstofflagers (18, 34) angeordnet sind.

**Claims**

**1.** A method of operating a plant (10, 11) for the production and/or handling of cement, comprising the steps of:

- Removal of a material sample (42) of cement clinker from a plant (10, 11) for the production and/or handling of cement,
- Dosing an activation fluid to the material sample (42),
**characterized by**
- determining the gas pressure and/or the amount of hydrogen gas and/or the amount of elemental aluminum in the mixture of the activation fluid and the material sample (42), and
- open loop/ closed loop control of the fuel discharge (36, 38) from a fuel store (18, 34) for feeding into a firing device (12, 14) of the plant (10, 11) for producing cement as a function of the determined gas pressure and/or the determined quantity of hydrogen gas and/or elemental aluminum, or

- open loop/ closed loop controlling the cement discharge (54) from a cement store (56, 58) for feeding into a handling device (52) of the plant (10, 11) for handling cement as a function of the determined gas pressure and/or the determined amount of hydrogen gas and/or elemental aluminum.

2. The method according to claim 1, wherein the activating fluid comprises an alkali hydroxide solution or an alkaline solution.

3. The method according to any one of the preceding claims, wherein the amount of elemental aluminum in the material sample (42) is calculated from the determined amount of hydrogen gas.

4. The method according to any one of the preceding claims, wherein the amount of elemental aluminum of the fuel discharge (36, 38) or the cement discharge (54) is open loop/ closed loop controlled.

5. Method according to one of the preceding claims, wherein the determined gas pressure, the amount of hydrogen and/or the amount of elemental aluminum is compared with a respective limit value and, if the determined pressure, the amount of hydrogen and/or the amount of elemental aluminum deviates from the limit value, the amount of elemental aluminum in the fuel discharge (36, 38) or the cement discharge (54) is increased or decreased.

6. Method according to one of the preceding claims, wherein the material sample (42) is taken from a preheater and/or a cooler of the plant (10) for producing cement clinker.

7. The method according to any one of the preceding claims, wherein the amount of hydrogen gas in the material sample (42) is determined over a period of about 2 to 240 minutes, preferably 2 to 45 minutes, in particular more than 240 minutes.

8. The method according to any one of the preceding claims, wherein the fuel discharge (36, 38) is made from a plurality of fuels (22 - 32) having different proportions of elemental aluminum.

9. Plant (10, 11) for the production and/or handling of cement clinker, comprising

a fuel store (18, 34) or a cement store (56, 58) with an outlet for discharging a fuel discharge (36, 38) from the fuel store (18, 34) or a cement discharge (54) from a cement store (56, 58),
a firing device (12, 14) which is connected to the fuel store (18, 34) for feeding the fuel discharge (36, 38; 54) and/or a handling device (52) which is connected to the cement store (56, 58) for feeding the cement discharge (54), and
an analysis device (40) for analyzing a material sample (42), which is connected to the outlet of the fuel store (18, 34) or the cement store (56, 58) in such a way that it open loop/ closed loop controls the fuel discharge (36, 38; 54) from the fuel store (18, 34) or the cement discharge (54) from the cement store (56, 58),
**characterized in that**
the analysis device (40) is designed such that it determines the quantity of hydrogen gas and/or the gas pressure in the material sample and open loop/ closed loop controls the fuel discharge (36, 38) or the cement discharge (54) as a function of the determined quantity of hydrogen gas and/or the determined gas pressure.

10. Plant (10, 11) according to claim 9, wherein the analysis device (40) is designed such that it calculates the amount of elemental aluminum in the material sample (42) from the determined amount of hydrogen gas.

11. Plant (10, 11) according to claim 9 or 10, wherein the analysis device (40) is designed such that it controls/regulates the amount of elemental aluminum of the fuel discharge (36, 38) or the cement discharge (54) as a function of the determined amount of hydrogen gas and/or the determined gas pressure.

12. Plant (10, 11) according to any one of claims 9 to 11, wherein the fuel storage (18, 34) comprises a plurality of fuels arranged in separate areas or storages within the fuel storage (18, 34).

**Revendications**

1. Procédé d'exploitation d'une installation (10, 11) pour la fabrication et/ou la manipulation de ciment, présentant les étapes suivantes :

- Prélèvement d'un échantillon de matériau (42) de clinker de ciment dans une installation (10, 11) de production et/ou de manipulation de ciment,
- le dosage d'un fluide d'activation sur l'échantillon de matériau (42),
**caractérisé par**
- déterminer la pression de gaz et/ou la quantité d'hydrogène gazeux et/ou la quantité d'aluminium élémentaire dans le mélange du fluide d'activation et de l'échantillon de matériau (42), et
- commande/régulation de l'évacuation de combustible (36, 38) d'un dépôt de combustible (18, 34) pour l'amenée dans un dispositif de combustion (12, 14) de l'installation (10, 11) pour la fabrication de ciment en fonction de la pression de gaz déterminée et/ou de la quantité déterminée d'hydrogène gazeux et/ou d'aluminium élémentaire ou
- commander/régler la décharge de ciment (54) à partir d'un entrepôt de ciment (56, 58) pour l'amener dans un dispositif de manipulation (52) de l'installation (10, 11) pour la manipulation de ciment en fonction de la pression de gaz déterminée et/ou de la quantité déterminée d'hydrogène gazeux et/ou d'aluminium élémentaire.

2. Procédé selon la revendication 1, dans lequel le fluide d'activation comprend une solution d'hydroxyde alcalin ou une solution alcaline.

3. Procédé selon l'une quelconque des revendications précédentes, dans lequel la quantité d'aluminium élémentaire dans l'échantillon de matériau (42) est calculée à partir de la quantité d'hydrogène gazeux déterminée.

4. Procédé selon l'une quelconque des revendications précédentes, dans lequel la quantité d'aluminium élémentaire de la décharge de combustible (36, 38) ou de la décharge de ciment (54) est commandée/régulée.

5. Procédé selon l'une quelconque des revendications précédentes, dans lequel la pression de gaz, la quantité d'hydrogène et/ou la quantité d'aluminium élémentaire déterminées sont comparées à une valeur limite respective et, en cas d'écart entre la pression, la quantité d'hydrogène et/ou la quantité d'aluminium élémentaire déterminées et la valeur limite, la quantité d'aluminium élémentaire dans la décharge de combustible (36, 38) ou la décharge de ciment (54) est augmentée ou diminuée.

6. Procédé selon l'une quelconque des revendications précédentes, dans lequel l'échantillon de matériau (42) est prélevé dans un préchauffeur et/ou un refroidisseur de l'installation (10) de production de clinker de ciment.

7. Procédé selon l'une quelconque des revendications précédentes, dans lequel la quantité d'hydrogène gazeux dans l'échantillon de matériau (42) est déterminée sur une période d'environ 2 à 240 minutes, de préférence 2 à 45 minutes, en particulier plus de 240 minutes.

8. Procédé selon l'une quelconque des revendications précédentes, dans lequel l'extracteur de combustible (36, 38) est fabriqué à partir d'une pluralité de combustibles (22 - 32) ayant des proportions différentes d'aluminium élémentaire.

9. Installation (10, 11) pour la fabrication et/ou la manipulation de clinker de ciment, comprenant

un dépôt de combustible (18, 34) ou un dépôt de ciment (56, 58) ayant une sortie pour décharger une décharge de combustible (36, 38) du dépôt de combustible (18, 34) ou une décharge de ciment (54) d'un dépôt de ciment (56, 58),
un dispositif de combustion (12, 14), qui est relié au stock de combustible (18, 34) pour l'alimentation de la décharge de combustible (36, 38 ; 54) et/ou un dispositif de manipulation (52), qui est relié au stock de ciment (56, 58) pour l'alimentation de la décharge de ciment (54), et
un dispositif d'analyse (40) pour l'analyse d'un échantillon de matériau (42), qui est relié à la sortie de l'entrepôt de combustible (18, 34) ou de l'entrepôt de ciment (56, 58) de telle sorte qu'il commande/régule la sortie de combustible (36, 38 ; 54) de l'entrepôt de combustible (18, 34) ou la sortie de ciment (54) de l'entrepôt de ciment (56, 58),
**caractérisé en ce que**
le dispositif d'analyse (40) est conçu de telle sorte qu'il détermine la quantité d'hydrogène gazeux et/ou la pression de gaz dans l'échantillon de matériau et commande/régule la décharge de combustible (36, 38) ou la décharge de ciment (54) en fonction de la quantité déterminée d'hydrogène gazeux et/ou de la pression de gaz déterminée.

**10.** Installation (10, 11) selon la revendication 9, dans laquelle le dispositif d'analyse (40) est conçu de telle sorte qu'il calcule la quantité d'aluminium élémentaire dans l'échantillon de matériau (42) à partir de la quantité déterminée d'hydrogène gazeux.

**11.** Installation (10, 11) selon la revendication 9 ou 10, dans laquelle le dispositif d'analyse (40) est conçu de telle sorte qu'il commande/régule la quantité d'aluminium élémentaire de la décharge de combustible (36, 38) ou de la décharge de ciment (54) en fonction de la quantité déterminée d'hydrogène gazeux et/ou de la pression gazeuse déterminée.

**12.** Installation (10, 11) selon l'une quelconque des revendications 9 à 11, dans laquelle le stockage de combustible (18, 34) comprend une pluralité de combustibles disposés dans des zones ou magasins distincts à l'intérieur du stockage de combustible (18, 34).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014113548 A1
- CA 838254